# EUROPEAN PATENT APPLICATION

(11) **EP 3 441 504 A1**
(43) Date of publication of application: **13.02.2019**
(21) Application number: 17779140.7
(22) Date of filing: 04.04.2017
(51) Int. Cl.: C23C 22/68, C22C 21/00, C23C 22/56, C23C 22/66, C22F 1/00, C22F 1/04

(54) **ALUMINUM ALLOY MATERIAL AND PRODUCTION METHOD THEREFOR, AND ALUMINUM ALLOY CLADDING MATERIAL USING ALUMINUM ALLOY MATERIAL**

(30) Priority: 06.04.2016 JP 2016076309
(71) Applicant: UACJ Corporation, Tokyo 100-0004 (JP)
(72) Inventor: SHIMADA Takatoshi, Tokyo 100-0004 (JP); TERAYAMA Kazuko, Tokyo 100-0004 (JP); OYA Yoshiyuki, Tokyo 100-0004 (JP)
(74) Representative: v. Bezold & Partner Patentanwälte - PartG mbB
(86) International application number: PCT/JP2017/014086
(87) International publication number: WO 2017/175762

(57) **Abstract**

Provided are: an Al-Mg-Si-based aluminum alloy material including an aluminum alloy including 0.10 to 1.50 mass% (hereinafter, "%") Si and 0.10 to 2.00% of Mg, in which an oxide coating film mainly containing aluminum is formed on a surface of the aluminum alloy material, a Mg-Si-based crystallized product having an equivalent circle diameter of 0.1 to 5.0 µm is contained at 100 to 150,000 particles/mm², a Mg-Si-based crystallized product having an equivalent circle diameter of more than 5.0 µm and 10.0 µm or less is contained at 5 particles/mm² or less, and the oxide coating film includes Si at a maximum concentration of 0.1 to 40.0% and Mg at a maximum concentration of 0.1 to 20.0%; a method for producing the aluminum alloy material; and an aluminum alloy clad material, in which the aluminum alloy material is clad on at least one surface of an aluminum core material.

## Description

### Technical Field

The present disclosure relates to an aluminum alloy material having excellent corrosion resistance. Specifically, the present disclosure relates to: an aluminum alloy material exhibiting high corrosion resistance by forming, on a surface of the aluminum alloy material, a coating film that does not have a sacrificial protection effect but has protective properties; a method for producing the aluminum alloy material; and an aluminum alloy clad material using the aluminum alloy material.

### Background Art

Aluminum materials and aluminum alloy materials (hereinafter collectively referred to as "aluminum alloy materials") have been used in various fields because of being lightweight and excellent in corrosion resistance, workability, decorativeness, strength, electrical conductivity, thermal conductivity, and the like. The aluminum alloy materials have been used in: transportation fields such as automobiles, railway vehicles, aircraft, ships, and containers from the viewpoint of the lightweight properties; foil and extruded-shaped materials having complicated shapes from the viewpoint of the workability; and construction sheaths, packaging materials, and the like from the viewpoint of the decorativeness. The application of the aluminum alloy materials to large-sized structures has also received attention from the viewpoint of the strength. Further, the aluminum alloy materials have been increasingly demanded in electronic fields such as the utilization of energy in power transmission lines and the like from the viewpoint of the electrical conductivity. The aluminum alloy materials have been used in air conditioners, engine parts, various heat exchangers, solar connectors, beverage cans, and the like from the viewpoint of the thermal conductivity.

Aluminum materials have been used in various fields other than such fields. However, environments in which the aluminum materials are used often contain Cl⁻. Pitting corrosion is prone to occur in aluminum alloy materials under environments in which Cl⁻ is present. In such environments, such aluminum alloy materials have still been insufficient in corrosion resistance. Therefore, such aluminum alloy materials subjected to alumite treatment, chemical conversion treatment, and/or the like have been often used. However, since the alumite treatment and the chemical conversion treatment have resulted in higher environmental loads and higher costs, treatment for lower environmental loads and lower costs has been demanded.

For such a demand, for example, PTL 1 proposes boehmite treatment in which the surface-treated aluminum component of a vacuum instrument is immersed in warm water at a high temperature. However, common boehmite treatment in which an aluminum alloy material is immersed in pure water allows the formation of a coating film mainly containing a hydrous oxide of aluminum. Such boehmite treatment has been insufficient in corrosion resistance because, even in the presence of a coating film due to the boehmite treatment, pitting corrosion easily occurs in an environment in which an ion such as Fe³⁺, Cu²⁺, or SO₃²⁻ acting as an oxidant is present.

PTL 2 proposes that the occurrence of pitting corrosion is suppressed by immersing an aluminum material in a solution containing at least one metal element that is baser than Al to form a coating film resulting in a decrease in the natural potential of an aluminum material. However, the case of only allowing the base metal to be contained in the oxide coating film has resulted in insufficient corrosion resistance because of resulting in a decrease in pitting potential although resulting in a decrease in natural potential.

Methods for improving corrosion resistance by using aluminum materials clad with sacrificial anode materials, such as Al-Zn-based alloys and Al-Si-Zn-based alloys, have come into widespread adoption in heat exchangers and the like. This is because in recent years, reductions in the thicknesses of tubes and the like have been demanded for reducing the weights of heat exchangers, whereby higher corrosion resistance has been demanded. However, since a corrosion rate is high in a material to which Zn is added, a reduction in the thickness of a tube causes a sacrificial protection layer to be early consumed, thereby preventing target corrosion resistance from being obtained. Moreover, Zn typically added to a sacrificial anode material layer is expected to be exhausted in the future, and the establishment of a corrosion prevention technique without using Zn has also been demanded.

For such demands, for example, PTL 3 proposes an aluminum alloy brazing structure for a heat exchanger, in which a skin material layer of an Al-Si alloy containing 1.5 to 3.0% of Si is arranged on at least one surface of a core material containing Mn, and Si-based precipitated particles with an appropriate size and density are dispersed in the Al-Si alloy skin material layer by heat treatment after brazing. However, corrosion resistance has been insufficient because of the too high concentration of Si in the skin material exposed to a corrosive environment.

Further, PTL 4 proposes a brazing sheet in which an element generating an intermetallic compound which is nobler than a matrix is contained in a sacrificial anode material, and the intermetallic compound which is nobler than the matrix is dispersed with an appropriate size and density. Corrosion resistance is improved by allowing a large number of intermetallic compounds which are nobler than the matrix of the sacrificial anode material to exist as local cathode points. However, since the intermetallic compounds which are nobler than the matrix of the sacrificial anode material result in an increase in corrosion rate, such a method for preventing corrosion is inappropriate for reducing a wall thickness. In any case, from the viewpoint of sacrificial protection, it has been difficult to enhance the corrosion resistance of a material of which the wall thickness is reduced.

### Citation List

### Patent Literature

PTL 1: Japanese Patent Application Publication No. H11-12763
PTL 2: Japanese Patent Application Publication No. H8-74066
PTL 3: Japanese Patent Application Publication No. 2008-284558
PTL 4: Japanese Patent Application Publication No. 2004-50195

### Summary of Invention

### Technical Problem

This disclosure is intended to solve the problems described above and to provide an aluminum alloy material preferable for various applications to automotive body sheets, heat exchangers, various pipes, aircraft, household electrical appliances, building materials, and the like. In other words, an objective of the present disclosure is to provide an aluminum alloy material that exhibits sufficient corrosion resistance to pitting corrosion without the help of sacrificial protection action under a corrosive environment in which Cl⁻ is present.

### Solution to Problem

In order to solve the problems described above, the present inventors focused their attention on an oxide coating film mainly containing aluminum and found that a coating film having very high protective properties is formed by allowing Si and Mg to be contained at appropriate concentrations in the oxide coating film, and the present disclosure was thus accomplished.

Specifically, in the present disclosure, claim 1 is an Al-Mg-Si-based aluminum alloy material including an aluminum alloy including 0.10 to 1.50 mass% Si, 0.10 to 2.00 mass% Mg, and the balance of Al and inevitable impurities, wherein an oxide coating film mainly containing aluminum is formed on a surface of the aluminum alloy material, a Mg-Si-based crystallized product existing in the aluminum alloy material and having an equivalent circle diameter of 0.1 to 5.0 µm is contained at 100 to 150,000 particles/mm², a Mg-Si-based crystallized product having an equivalent circle diameter of more than 5.0 µm and 10.0 µm or less is contained at 5 particles/mm² or less, and the oxide coating film includes Si at a maximum concentration of 0.1 to 40.0 mass%, Mg at a maximum concentration of 0.1 to 20.0 mass%, and the balance of Al and inevitable impurities.

In claim 2 in the present disclosure, the aluminum alloy further includes one or more selected from 0.05 to 1.00 mass% Fe, 0.05 to 1.00 mass% Ni, 0.05 to 1.00 mass% Cu, 0.05 to 1.50 mass% Mn, 0.05 to 0.30 mass% Ti, 0.05 to 0.30 mass% Zr, 0.05 to 0.30 mass% Cr, and 0.05 to 0.30 mass% V, in claim 1.

In claim 3 in the present disclosure, a Mg-Si-based precipitate having a length of 10 to 1,000 nm is contained at 1,000 particles to 100,000 particles/µm³ in the aluminum alloy material after sensitization treatment for observation at 175°C for 5 hours, in claim 1 or 2.

In the present disclosure, claim 4 is an aluminum alloy clad material, wherein the aluminum alloy material according to any one of claims 1 to 3 is clad on at least one surface of an aluminum core material.

In the present disclosure, claim 5 is a method for producing the aluminum alloy material according to any one of claims 1 to 3, the method including immersing an aluminum alloy material on which the oxide coating film has not yet been formed, for 1 minute or more, in an aqueous solution environment having a Cl⁻ concentration of 0.5% or less, a pH 4 to 10, and a liquid temperature of 65°C or more.

### Advantageous Effects of Invention

The Al-Mg-Si-based aluminum alloy material according to the present disclosure can exhibit favorable corrosion resistance under an environment in which Cl⁻ is present, without utilizing sacrificial protection action, even in a material of which the wall thickness is reduced, due to an oxide coating film that is formed on a surface of the aluminum alloy material and that mainly contains aluminum. In addition, the oxide coating film can be easily and inexpensively formed, and also has a small environmental load.

### Brief Description of Drawings

FIG. 1 is a graph representing an example in which an oxide coating film that is formed on a surface of an aluminum alloy material according to the present disclosure and that mainly contains aluminum is analyzed by GDOES; and
FIG. 2 is a graph representing another example in which an oxide coating film that is formed on a surface of an aluminum alloy material according to the present disclosure and that mainly contains aluminum is analyzed by GDOES.

### Description of Embodiments

An aluminum alloy material according to the present disclosure will now be described in detail below.

### 1. Oxide Coating Film Mainly Containing Aluminum

The aluminum alloy material according to the present disclosure includes an Al-Mg-Si-based aluminum alloy, and an oxide coating film mainly containing aluminum (hereinafter simply referred to as "aluminum oxide coating film") is formed on a surface of the aluminum alloy material. The aluminum oxide coating film includes Si at a maximum concentration of 0.1 to 40.0 mass% (hereinafter simply referred to as "%"), Mg at a maximum concentration of 0.1 to 20.0%, and the balance of Al and inevitable impurities. The aluminum oxide coating film referred to herein may be a coating film in which not only an oxide of Al but also a hydrous oxide or hydroxide of Al coexists.

### 1-1. Maximum Concentration of Si

Si in the aluminum oxide coating film consumes oxygen vacancies, thereby repairing defects in the coating film and imparting properties similar to the properties of an n-type semiconductor to an oxide mainly containing aluminum (hereinafter simply referred to as "aluminum oxide"). As a result, Cl⁻ is prevented from entering the aluminum oxide coating film, and the effect of increasing the pitting potential of the aluminum alloy material to suppress the occurrence of pitting corrosion is exhibited. For sufficiently obtaining the effect, it is necessary to set the maximum concentration of Si in the aluminum oxide coating film to 0.1% or more. In contrast, when the maximum concentration of Si is more than 40.0%, the aluminum oxide is not formed. As a result, the maximum concentration of Si in the aluminum oxide coating film is set to 0.1 to 40.0%. The preferred maximum concentration of Si in the aluminum oxide coating film is 1 to 20.0%.

### 1-2. Maximum Concentration of Mg

Mg in the aluminum oxide coating film causes an immersion potential to be lower and therefore exhibits the effect of suppressing the occurrence of pitting corrosion in the aluminum alloy material. For sufficiently obtain the effect, it is necessary to set the maximum concentration of Mg in the aluminum oxide coating film to 0.1% or more. In contrast, when the maximum concentration of Mg is more than 20.0%, the uniform corrosion rate of the aluminum oxide coating film is prominently increased, and therefore, corrosion resistance is deteriorated. As a result, the maximum concentration of Mg in the aluminum oxide coating film is set to 0.1 to 20.0%. The preferred maximum concentration of Mg in the aluminum oxide coating film is 1 to 10.0%.

### 1-3. Inevitable impurities

Even if Na, Ca, B, C, P, S, and the like, in addition to the essential elements described above, are contained, as inevitable impurities, in each content of 1% or less and a total content of 5% or less, a function as a protective coating film with high corrosion resistance is not impaired.

### 1-4. Measurement of Concentration of Si and Mg

The concentrations of Si and Mg in the aluminum oxide coating film are determined by measuring the emission intensities of Si and Mg in a sputtering component by using glow discharge optical emission spectrometry (GDOES) while sputtering the aluminum oxide coating film. Specifically, calibration curves were generated for emission intensities obtained from GDOES and the concentrations of Si and Mg, respectively, by using aluminum materials with the known concentrations of Si and Mg, and the concentrations of Si and Mg in the sputtering component of a measurement sample were determined based on the calibration curves. The sputtering conditions of GDOES were set at 800 Pa to which a sample chamber with high-purity Ar was set, a pulse frequency of 100 Hz, a duty cycle of 0.5, and an effective value of 15 W.

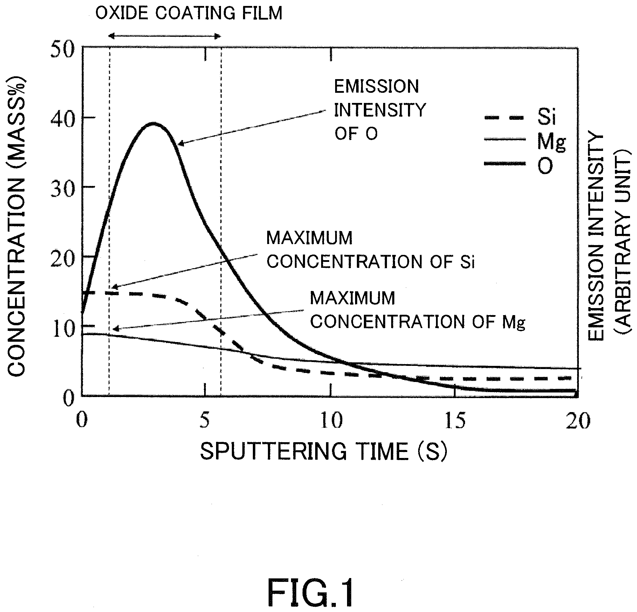

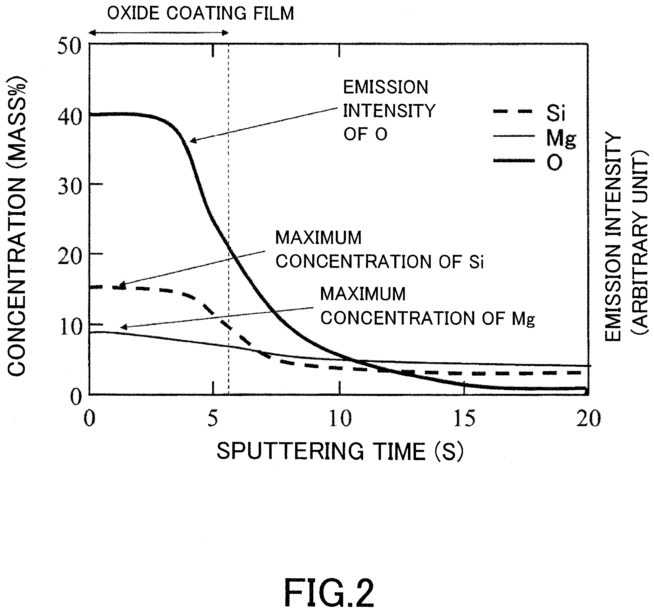

As illustrated in FIG. 1, the emission intensity of O is gradually increased from the start of sputtering and decreased after reaching the maximum value. In the present disclosure, a range in which the aluminum oxide coating film is present is determined based on the emission intensity of O. In other words, an actual range in which the aluminum oxide coating film was present was regarded as a range from a time point at which (emission intensity of O at time of start of sputtering + maximum value of emission intensity of O) × 1/2 was satisfied to a time point at which the half value of the maximum value after the maximum value was indicated, in sputtering time. Concurrent use of analysis of an electron microscope image revealed that the deposition of salt, oil, dust, and/or the like in a solution on the oxide coating film prevented a surface of the aluminum oxide coating film from being reached in a period from the time point of the start of sputtering to the time point at which (emission intensity of O at time of start of sputtering + maximum value of emission intensity of O) × 1/2 was satisfied. Similarly, the analysis of the electron microscope image also revealed that the time point at which the half value of the maximum value was indicated after the maximum value was the terminal (that is, a surface close to an aluminum base metal) of the aluminum oxide coating film. Typically, in a sample immersed in a solution environment, a time point at which the half value of the maximum value of the emission intensity of O is indicated is present not only in time points after the maximum value but also in time points before the time point of the maximum value, as illustrated in FIG. 1. In contrast, a time point at which the half value of the maximum value of the emission intensity of O is indicated may be present only after the time point of the maximum value, as illustrated in FIG. 2. In such a case, the actual range in which the aluminum oxide coating film was present was regarded as a range between the time of the start of the sputtering and the time point of the half value describe above. The concurrent use of the analysis of the electron microscope image revealed that in such a case, the surface of the aluminum oxide coating film was reached from the time point of the start of the sputtering.

In such a manner as described above, the thickness of the aluminum oxide coating film was specified, and the maximum values of the concentrations of Mg and Si, measured in the oxide coating film, were regarded as the maximum concentration of Mg and the maximum concentration of Si, respectively. The thickness of the aluminum oxide coating film in the present disclosure is 1 to 10 µm, and preferably 3 to 7 µm. A method for measuring a concentration in the aluminum oxide coating film in the present disclosure is not limited to the method described above, and X-ray photoelectron spectroscopy (XPS), Auger electron spectroscopy (AES), or the like may be used as the method.

### 2. Alloy Composition of Aluminum Alloy Material

### 2-1. Essential Element

The Al-Mg-Si-based aluminum alloy material according to the present disclosure includes an aluminum alloy containing Si and Mg as essential elements. In other words, the aluminum alloy includes an aluminum alloy including 0.10 to 1.50% of Si, 0.10 to 2.00% of Mg, and the balance of Al and inevitable impurities. In other words, such Si and Mg form a fine Mg-Si-based precipitate containing Mg and Si as main components and a Mg-Si-based crystallized product which is larger than the precipitate, in an Al-Mg-Si-based alloy. The Mg-Si-based precipitate is precipitated even at room temperature. The Mg-Si-based precipitate has an acicular β" phase (Mg₂Si) or a Q" phase (Al-Mg-Si-Cu) having the same shape in the case of the addition of Cu.

A Si-enriched aluminum oxide coating film containing Mg is formed on the Mg-Si-based precipitate by preferentially dissolving Mg in a solution. Si and Mg in the aluminum oxide coating film are diffused or migrated into an aluminum oxide coating film present on an area other than the Mg-Si-based precipitate, thereby being taken in by the aluminum oxide coating film. Further, aluminum in the aluminum oxide coating film present on the area other than the Mg-Si-based precipitate is diffused or migrated into the Si-enriched aluminum oxide coating film containing Mg, thereby being taken in by the aluminum oxide coating film. As a result, the aluminum oxide coating film is homogeneously formed on the whole surface of the aluminum alloy material.

Si in the aluminum oxide coating film has the action of consuming oxygen vacancies in the oxide coating film, thereby repairing defects, and the action of imparting properties similar to the properties of an n-type semiconductor to an aluminum oxide to increase the pitting potential of the aluminum alloy material. In addition, Mg in the aluminum oxide coating film is passed through the oxide coating film mainly by migration at a low potential. As a result, Mg has the action of decreasing the immersion potential of the aluminum alloy material to suppress the occurrence of pitting corrosion. The actions of Si and Mg result in the formation of the aluminum oxide coating film having very high protective properties and therefore enable the high corrosion resistance of the aluminum alloy material to be maintained without the help of sacrificial protection action.

When the contents of Si and Mg in the aluminum alloy are less than 0.10%, the amounts of Mg-Si-based precipitate and crystallized product become small, and an aluminum oxide coating film having protective properties is not formed. When the content of Si is more than 1.50%, a pure Si is precipitated. Since a protective aluminum oxide coating film is not formed on the pure Si, the pitting potential of the aluminum alloy material is decreased, thereby deteriorating corrosion resistance. Since cathode reaction is activated, thereby increasing a natural potential, on the pure Si, pitting corrosion easily occurs in the aluminum alloy material, thereby deteriorating corrosion resistance. In contrast, when the content of Mg is more than 2.00%, the amount of Mg in the aluminum oxide coating film is increased, thereby increasing a corrosion rate and deteriorating the corrosion resistance of the aluminum alloy material. As a result, in the aluminum alloy, the content Si is set to 0.10 to 1.50%, and the content of Mg is set to 0.10 to 2.00%. The preferred content of Si is 0.20 to 1.00%, and the preferred content of Mg is 0.30 to 1.00%.

### 2-2. Selective Additional Elements

The aluminum alloy included in the aluminum alloy material according to the present disclosure preferably further contains, as selective additional elements, one or more selected from 0.05 to 1.00% of Fe, 0.05 to 1.00% of Ni, 0.05 to 1.00% of Cu, 0.05 to 1.50% of Mn, 0.05 to 0.30% of Ti, 0.05 to 0.30% of Zr, 0.05 to 0.30% of Cr, and 0.05 to 0.30% of V.

Fe and Ni are elements contributing to improvement in corrosion resistance. These elements result in an increase in corrosion rate after the aluminum oxide coating film has been damaged. However, the homogeneous distribution of an Fe-based compound and a Ni-based compound causes the compounds to be taken in by the aluminum oxide coating film to improve the acid resistance and alkali resistance of the oxide coating film. As a result, the penetration life of the aluminum alloy material is improved. When the contents of Fe and Ni are less than 0.05%, the effect of improving the acid resistance and alkali resistance of the aluminum oxide coating film becomes insufficient. In contrast, when the contents of Fe and Ni are more than 1.00%, the Fe-based compound and the Ni-based compound are not homogeneously dispersed. As a result, the aluminum oxide coating film having protective properties is not homogeneously formed, and therefore, the corrosion resistance of the aluminum alloy material is deteriorated. As a result, the contents of Fe and Ni are preferably set to 0.05 to 1.00%, and still more preferably set to 0.10 to 0.50%.

Cu is contained in the aluminum alloy, whereby the Mg-Si-based precipitate described above becomes a Q" phase (Al-Mg-Si-Cu). The formation of the homogeneous aluminum oxide coating film can be promoted by more finely dispersing the Mg-Si-based precipitate. To that end, the content of Cu is preferably set to 0.05% or more. However, a Cu content of more than 1.00% results in an increase in the amount of Cu that passes through the aluminum oxide coating film and that is dissolved, and therefore causes a corrosion rate to be increased, thereby deteriorating the corrosion resistance of the aluminum alloy material. As a result, the content of Cu is preferably set to 0.05 to 1.00%, and still more preferably set to 0.10 to 0.50%.

Mn is crystallized or precipitated as an Al-Mn-based intermetallic compound and contributes to improvement in the strength of the aluminum alloy material. In addition, the Al-Mn-based intermetallic compound takes in Fe and therefore suppresses an increase in corrosion rate after the aluminum oxide coating film has been damaged. In order to obtain such effects, the content of Mn is preferably set to 0.05% or more. However, a Mn content of more than 1.50% may cause a giant intermetallic compound to be crystallized, thereby impairing productability. As a result, the content of Mn is preferably set to 0.05 to 1.50%, and still more preferably set to 0.10 to 1.00%.

Ti, Zr, Cr, and V are elements contributing to improvement in corrosion resistance, particularly pitting corrosion resistance. Ti, Zr, Cr, and V added into the aluminum alloy are divided into a region at the high concentrations of Ti, Zr, Cr, and V and a region at the low concentrations of Ti, Zr, Cr, and V, and the regions are alternately distributed in lamination form along the thickness direction of the aluminum alloy material. The region at the low concentrations is more preferentially corroded than the region at the high concentrations. As a result, a layer in which corrosion proceeds and a layer in which corrosion is inhibited from proceeding exist alternately along the thickness direction in the form of the corrosion of the aluminum alloy material. Such form of corrosion causes corrosion to be inhibited as a whole from proceeding in the thickness direction and results in improvement in pitting corrosion resistance after the aluminum oxide coating film has been damaged. Each of the contents of Ti, Zr, Cr, and V is preferably set to 0.05% or more in order to sufficiently obtain such an effect of improving pitting corrosion resistance. In contrast, when each of the contents of Ti, Zr, Cr, and V is more than 0.30%, a coarse compound may be produced in casting, thereby impairing productability. As a result, the contents of Ti, Zr, Cr, and V are preferably set to 0.05 to 0.30%, and still more preferably set to 0.10 to 0.20%.

### 2-3. Inevitable impurities

Even if Na, Ca, and the like, in addition to the essential elements and selective additional elements described above, are contained, as inevitable impurities, in each amount of 0.05% or less and a total amount of 0.15% or less, the function of the aluminum oxide coating film having protective properties is not impaired.

### 3. Surface Density of Mg-Si-Based Crystallized Product

In the Al-Mg-Si-based aluminum alloy material according to the present disclosure, the surface density of a Mg-Si-based crystallized product having an equivalent circle diameter of 0.1 to 5.0 µm is 100 to 150,000 particles/mm², and the surface density of a Mg-Si-based crystallized product having an equivalent circle diameter of more than 5.0 µm and 10.0 µm or less is 5 particles/mm² or less. The Mg-Si-based crystallized product basically includes Mg and Si at an atomic number ratio of two to one. The crystallized product includes not only Mg₂Si but also a ternary composition of Mg-Si-Fe or Mg-Si-Cu, or a quaternary composition of Mg-Si-Fe-Cu in a case in which the aluminum alloy material contains Fe and Cu as selective additional elements.

The present inventors found that the Al-Mg-Si-based aluminum alloy material according to the present disclosure exhibits high corrosion resistance without the help of sacrificial protection action, due to the formation of the aluminum oxide coating film having protective properties on a surface of the Al-Mg-Si-based aluminum alloy material. Such high corrosion resistance is exhibited because Si and Mg are contained in the aluminum oxide coating film. As a result of further examinations, it was found that for allowing both Si and Mg to be contained in the aluminum oxide coating film, it is necessary to allow Mg and Si to be taken in from a compound which does not contain Al in an Al-Mg-Si alloy material, for example, a Mg-Si-based crystallized product.

When performing various examinations, the present inventors found that the aluminum oxide coating film having the protective properties described above is formed by setting, in predetermined ranges, the size and surface density of the Mg-Si-based crystallized product present in the Al-Mg-Si-based aluminum alloy. Typically, the size of a Mg-Si-based crystallized product present in an Al-Mg-Si-based aluminum alloy is an equivalent circle diameter of 0.1 to 10.0 µm. However, the crystallized product which can contribute to the formation of the aluminum oxide coating film having the protective properties preferably has an equivalent circle diameter of 0.1 to 5.0 µm and a surface density of 100 to 150,000 particles/mm². A surface density of less than 100 particles/mm² results in the inhomogeneous distribution of Mg and the Si in the aluminum oxide coating film, while a surface density of more than 150,000 particles/mm² prevents the aluminum oxide coating film from being formed and therefore results in the deterioration of corrosion resistance. In addition, the surface density of the crystallized product having an equivalent circle diameter of more than 5.0 µm and 10.0 µm or less is preferably set to 5 particles/mm² or less, and more preferably to 0 particles/mm². This is because the homogeneous formation of the aluminum oxide coating film having the protective properties is inhibited, thereby deteriorating corrosion resistance, when the surface density is more than 5 particles/mm². A crystallized product having an equivalent circle diameter of less than 0.1 µm is regarded as inapplicable because of hardly existing. A Mg-Si-based crystallized product having an equivalent circle diameter of 10 µm or more is also regarded as inapplicable because of being solid-dissolved again by heat treatment such as homogenization treatment and therefore hardly existing.

The surface density of the Mg-Si-based crystallized product described above is measured by observing an optional portion of the Al-Mg-Si-based aluminum alloy material with a microscope. For example, a cross section along a thickness direction or a cross section parallel to a surface is observed. Each of the equivalent circle diameter and the surface density is set as the arithmetic mean value of measurement values at plural points.

### 4. Volume Density of Al-Mg-Based Precipitate

The volume density of a Mg-Si-based precipitate with a length of 10 to 1,000 nm, observed in the Al-Mg-Si-based aluminum alloy material according to the present disclosure, is preferably 1,000 to 100,000 particles/µm³. As a result of detailed examinations, the present inventors found that like the Mg-Si-based crystallized product, this precipitate also contributes to the homogeneous formation of the aluminum oxide coating film having the protective properties. It was found that such a Mg-Si-based precipitate is observed as an acicular Mg-Si-based precipitate having a size enabling microscopic observation by subjecting the Mg-Si-based precipitate to sensitization treatment at 175°C for 5 hours although it is difficult to view the Mg-Si-based precipitate by microscopic observation with TEM or the like. This is considered to be because a very fine Mg-Si-based precipitate which originally exists greatly grows due to the sensitization treatment. Further examinations conducted by the present inventors revealed that an acicular Mg-Si-based precipitate with a length of 10 to 1,000 nm, observed in the aluminum alloy material after the sensitization treatment, improves corrosion resistance. According to analysis performed by the present inventors, the presence of a precipitate of more than 10 nm was not able to be confirmed before the sensitization treatment, and therefore, the original length of such a fine Mg-Si-based precipitate before sensitization treatment is presumed to be several nanometers to 10 nm.

Thus, further repeated examinations revealed that a coating film having favorable protective properties can be obtained when the volume density of an acicular Mg-Si-based precipitate having a length of 10 nm or more is 1,000 to 100,000 particles/µm³ or more after the sensitization treatment described above. A volume density of less than 1,000 particles/µm³ results in the too small precipitation amount of Mg-Si-based precipitate and therefore results in a decrease in the concentration of Si in the aluminum oxide coating film, thereby preventing an aluminum oxide coating film having favorable protective properties from being homogeneously formed. In contrast, a volume density of more than 100,000 particles/µm³ results in the too large precipitation amount of Mg-Si-based precipitate and therefore causes the preferential dissolution of Mg to significantly occur, thereby deteriorating corrosion resistance.

A Mg-Si-based precipitate of less than 10 nm, observed in the aluminum alloy material after the sensitization treatment described above, was regarded as inapplicable because it was impossible to clearly confirm the presence of the Mg-Si-based precipitate even after the sensitization treatment. Further, a Mg-Si-based precipitate of more than 1,000 nm was also regarded as inapplicable because it was impossible to confirm the presence of the Mg-Si-based precipitate.

The above-described volume density of Mg-Si-based precipitate was determined by optionally photographing plural points (5 to 10 points) in the 100-plane of a specimen with a thickness of around 100 to 200 nm, produced by a focused ion beam (FIB), to generate a TEM image at a magnification of around 500,000 times, measuring the number of acicular precipitates with a length of 10 to 1,000 nm, precipitated in three directions along a 100-plane direction, by image processing, and dividing the number by a measurement volume to determine the density of each measurement point. The arithmetic mean value of the plural points was regarded as the density distribution of the sample.

### 5. Clad Material

A clad material is produced using the aluminum alloy material according to the present disclosure. For example, a two-layered clad material may be formed by cladding the aluminum alloy material according to the present disclosure on one surface of the core material including an aluminum material, or a three-layered clad material may be formed by cladding the aluminum alloy material according to the present disclosure on both surfaces of the core material including an aluminum material. Instead of the clad materials, a three-layered clad material may be formed by cladding the aluminum alloy material according to the present disclosure on one surface of the core material including an aluminum material and cladding an aluminum alloy material such as an Al-Si-based aluminum alloy material having brazing function or an Al-Zn-based aluminum alloy material having sacrificial protection action on the other surface of the core material.

### 5-1. Core Material

The core material including the aluminum alloy material described above is not particularly limited as long as being an aluminum material. The aluminum alloy refers to pure aluminum or an aluminum alloy. The pure aluminum is aluminum having a purity of 99% or more, and examples thereof include 1000-series aluminum materials. As the aluminum alloy, for example, aluminum materials based on 2000-series, 3000-series, 4000-series, 5000-series, 7000-series, and the like are used.

### 6. Method for Producing Al-Mg-Si-Based Alloy Material

A method for producing the aluminum alloy material according to the present disclosure will be described. The production method includes: a semi-continuous casting step in which an aluminum alloy material is subjected to semi-continuous casting at an ingot surface cooling rate of 1°C/s or more; and a homogenization treatment step in which an ingot of a sacrificial anode material is heat-treated at a temperature of 450 to 570°C for 1 hour or more. The aluminum alloy material on which the aluminum oxide coating film has not yet been formed is made by performing, as needed, a facing step, a hot-rolling step, a cold-rolling step, and an annealing step, after the casting, as appropriate.

### 6-1. Rate of Cooling Surface of Ingot in Semi-Continuous Casting Step

The rate of cooling the surface of the ingot of the aluminum alloy material in the semi-continuous casting step is set to 1°C/s or more. A cooling rate of less than 1°C/s causes a coarse Mg-Si-based crystallized product to be generated in the aluminum alloy material, thereby preventing the appropriate distribution of the Mg-Si-based crystallized product from being obtained. The cooling rate can be calculated from a dendrite arm spacing by observing an ingot structure (reference: The Japan Institute of Light Metals, Research Committee, "Dendrite arm spacing of aluminum and the measurement method of a cooling rate". The surface of the ingot refers to a range from the outermost surface to 30 mm.

### 6-2. Homogenization Treatment Step

Further, the ingot of the aluminum alloy material cast in the semi-continuous casting step is subjected to the homogenization treatment step in which heat treatment is performed at a temperature of 450 to 570°C for 1 hour or more. As a result, a metal structure in the aluminum alloy material can be homogenized, and a coarse Mg-Si-based crystallized product can be solid-dissolved again. A heat treatment temperature of less than 450°C or a heat treatment time of less than 1 hour prevents the effect of homogenizing the metal structure and the effect of solid-dissolving the coarse Mg-Si-based crystallized product again from being sufficiently obtained. A heat treatment temperature of more than 570°C may cause the aluminum alloy material to be melted. The upper limit value of the heat treatment time is not particularly limited, but is preferably set to 20 hours or less from an economical viewpoint and the like.

### 7. Method for Forming Aluminum Oxide Coating Film

In a method for forming an aluminum oxide coating film on a surface of the aluminum alloy material according to the present disclosure, the aluminum alloy material (that is, an aluminum alloy material on which an aluminum oxide coating film has not yet been formed) produced in each step described above is immersed, for 1 minute or more, in an aqueous solution environment having a Cl⁻ concentration of 0.5% or less, a pH 4 to 10, and a liquid temperature of 65°C or more.

### 7-1. Temperature

The aluminum oxide coating film described above is formed on a surface of an Al-Mg-Si-based alloy material in an environment at a temperature of 65°C or more. Accordingly, the formation of an aluminum oxide coating film having excellent corrosion resistance requires an environment at a temperature of 65°C or more, preferably 80°C or more, and more preferably requires boiling water (100°C).

### 7-2. pH

The aluminum oxide coating film described above is formed on the surface of the Al-Mg-Si-based alloy material in an aqueous solution environment having a pH 4 to 10. When the pH of the aqueous solution is less than 4, the dissolution rate of the aluminum oxide coating film exceeds the formation rate of the aluminum oxide coating film, and therefore, the aluminum oxide coating film is not substantially formed. In contrast, when the pH of the aqueous solution is more than 10, the alkali dissolution rate of the aluminum oxide coating film exceeds the formation rate of the aluminum oxide coating film, and therefore, the aluminum oxide coating film is not substantially formed. As a result, it is necessary to set the pH of the aqueous solution to 4 to 10. The pH of the aqueous solution is preferably 5 to 9, and more preferably 6 to 7.

### 7-3. Concentration of Cl⁻

The concentration of Cl⁻ in the aqueous solution is set to 0.5% or less. When the concentration of Cl⁻ is more than 0.5%, the rate of damaging the aluminum oxide coating film due to Cl⁻ exceeds the formation rate of the aluminum oxide coating film, the aluminum oxide coating film is not substantially formed. Therefore, it is necessary to set the concentration of Cl⁻ in the aqueous solution to 0.5% or less. The concentration of Cl⁻ in the aqueous solution is preferably 0.1% or less. The lower limit value of the concentration of Cl⁻ in the aqueous solution is preferably set to 0%.

### 7-4. Immersion Time

The immersion time is set to 1 minute or more. An immersion time of less than 1 minute results in the insufficient and inhomogeneous migration of Mg, Si, and Al, and prevents the aluminum oxide coating film having the protective properties from being formed. Therefore, the immersion time is set to 1 minute or more, preferably to 30 minutes or more, and more preferably to 60 minutes or more. The upper limit value of the immersion time is preferably set to 1,440 minutes from the viewpoint of the sufficient formation of the aluminum oxide coating film as well as working efficiency.

### Examples

The present disclosure will now be described in more detail with reference to Examples. The Examples merely exemplify the present disclosure and do not limit the technical scope of the present disclosure.

Alloys having compositions set forth in Table 1 and Table 2 was used in aluminum alloy materials. These alloys were cast by a semi-continuous casting method at a cooling rate of 3°C/s in order to prevent a coarse Mg-Si-based crystallized product from being generated. After the casting, the alloys were faced and then subjected to homogenization treatment at a temperature of 500°C for 3 hours in order to homogenize a metal structure and to solid-dissolve a coarse Mg-Si-based crystallized product again. The casting method and homogenization treatment described above can also be adopted for a sheet material and an extruded material.

### [Table 1]

**Table 1**

| No. | Alloy composition (mass%) | | | | | | | | | | | |
|---|---|---|---|---|---|---|---|---|---|---|---|---|
| | Si | Mg | Fe | Ni | Cu | Mn | Ti | Zr | Cr | V | Al | |
| Al | 0.80 | 0.80 | - | - | - | - | - | - | - | - | Balance | Within the scope of the present disclosure of claim 1 |
| A2 | 0.80 | 0.50 | - | - | - | - | - | - | - | - | Balance | |
| A3 | 0.83 | 0.20 | - | - | - | - | - | - | - | - | Balance | |
| A4 | 0.50 | 0.50 | - | - | - | - | - | - | - | - | Balance | |
| A5 | 0.20 | 0.53 | - | - | - | - | - | - | - | - | Balance | |
| A6 | 0.10 | 0.80 | - | - | - | - | - | - | - | - | Balance | |
| A7 | 1.45 | 0.80 | - | - | - | - | - | - | - | - | Balance | |
| A8 | 0.50 | 0.10 | - | - | - | - | - | - | - | - | Balance | |
| A9 | 0.80 | 1.50 | - | - | - | - | - | - | - | - | Balance | |
| A10 | 0.80 | 2.00 | - | - | - | - | - | - | - | - | Balance | |
| A28 | 0.05 | 0.83 | - | - | - | - | - | - | - | - | Balance | Outside the scope of the present disclosure of claim 1 |
| A29 | 2.00 | 1.00 | - | - | - | - | - | - | - | - | Balance | |
| A30 | 0.80 | 0.05 | - | - | - | - | - | - | - | - | Balance | |
| A31 | 0.80 | 2.50 | - | - | - | - | - | - | - | - | Balance | |
| A32 | 2.50 | 0.30 | 0.10 | - | - | - | - | - | - | - | Balance | |

### [Table 2]

**Table 2**

| No. | Alloy composition (mass%) | | | | | | | | | | | |
|---|---|---|---|---|---|---|---|---|---|---|---|---|
| | Si | Mg | Fe | Ni | Cu | Mn | Ti | Zr | Cr | V | Al | |
| A11 | 0.80 | 0.83 | 0.05 | - | - | - | - | - | - | - | Balance | |
| A12 | 0.80 | 0.80 | 1.00 | - | - | - | - | - | - | - | Balance | |
| A13 | 0.80 | 0.81 | 0.10 | - | 0.05 | - | - | - | - | - | Balance | |
| A14 | 0.80 | 0.80 | 0.10 | - | 1.00 | - | - | - | - | - | Balance | |
| A15 | 0.80 | 0.80 | 0.10 | - | - | 0.05 | - | - | - | - | Balance | |
| A16 | 0.83 | 0.80 | 0.10 | - | - | 1.50 | - | - | - | - | Balance | |
| A17 | 0.80 | 0.83 | 0.10 | - | - | - | 0.05 | - | - | - | Balance | |
| A18 | 0.80 | 0.80 | 0.13 | - | - | - | 0.30 | - | - | - | Balance | |
| A19 | 0.84 | 0.80 | 0.10 | - | - | - | - | 0.05 | - | - | Balance | Within the scope of the present |
| A20 | 0.80 | 0.80 | 0.14 | - | - | - | - | 0.30 | - | - | Balance | disclosure of claim 2 |
| A21 | 0.80 | 0.80 | 0.10 | - | - | - | - | - | 0.05 | - | Balance | |
| A22 | 0.80 | 0.80 | 0.10 | - | - | - | - | - | 0.30 | - | Balance | |
| A23 | 0.80 | 0.80 | 0.10 | 0.05 | - | - | - | - | - | - | Balance | |
| A24 | 0.80 | 0.80 | 0.10 | 1.00 | - | - | - | - | - | - | Balance | |
| A25 | 0.83 | 0.80 | 0.12 | - | - | - | - | - | - | 0.05 | Balance | |
| A26 | 0.80 | 0.83 | 0.10 | - | - | - | - | - | - | 0.30 | Balance | |
| A27 | 1.49 | 0.83 | 0.13 | - | - | - | - | - | - | - | Balance | |
| A33 | 1.00 | 1.02 | 0.10 | - | 1.20 | - | - | - | - | - | Balance | Outside the scope of the present disclosure of claim 2 |
| A34 | 1.00 | 1.00 | 0.10 | - | - | 1.80 | - | - | - | - | Balance | |
| A35 | 1.02 | 1.00 | 0.12 | - | - | - | 0.35 | - | - | - | Balance | |
| A36 | 1.00 | 1.00 | 0.13 | - | - | - | - | 0.35 | - | - | Balance | |
| A37 | 1.00 | 1.02 | 0.10 | - | - | - | - | - | 0.35 | - | Balance | |
| A38 | 1.02 | 1.00 | 0.10 | 1.20 | - | - | - | - | - | - | Balance | |
| A39 | 1.00 | 1.01 | 1.20 | - | - | - | - | - | - | - | Balance | |
| A40 | 1.00 | 1.03 | 0.11 | - | - | - | - | - | - | 0.35 | Balance | |

A single sheet which was not clad (hereinafter referred to as "single sheet") was produced as described below. An aluminum alloy material ingot was hot-rolled at a temperature of 500°C to form a sheet material of 3.5 mm. Then, the sheet material was cold-rolled to 0.20 mm, then annealed at 360°C for 3 hours, and then cold-rolled to produce a sheet material sample having an overall thickness of 0.15 mm.

The above-described aluminum alloy material which was a single sheet was used as a skin material and stacked on aluminum alloy ingots set forth in Table 3 to produce two-layered clad materials with combinations set forth in Table 4. These combinational materials were hot-rolled at a temperature of 520°C according to a usual method for producing a clad material to form two-layered clad materials having a thickness of 3.5 mm. Then, the two-layered clad materials were cold-rolled to 0.20 mm, then annealed at 360°C for 3 hours, and then cold-rolled to produce two-layered clad sheet samples having an overall thickness of 0.15 mm and a cladding ratio of 10%.

### [Table 3]

**Table 3**

| No. | JIS name | Alloy composition (mass%) | | | | | | | |
|---|---|---|---|---|---|---|---|---|---|
| | | Si | Fe | Cu | Mn | Mg | Zn | Ti | Al |
| B1 | A1100 | 0.22 | 0.32 | 0.13 | 0.02 | 0.00 | 0.01 | 0.00 | Balance |
| B2 | A2024 | 0.35 | 0.33 | 4.70 | 0.64 | 1.59 | 0.13 | 0.07 | Balance |
| B3 | A3003 | 0.43 | 0.30 | 0.13 | 1.00 | 0.00 | 0.02 | 0.02 | Balance |
| B4 | A4032 | 11.80 | 0.37 | 0.89 | 0.00 | 1.18 | 0.07 | 0.10 | Balance |
| B5 | A5052 | 0.21 | 0.28 | 0.03 | 0.01 | 2.50 | 0.03 | 0.00 | Balance |
| B6 | A7072 | 0.29 | 0.33 | 0.02 | 0.03 | 0.02 | 1.18 | 0.00 | Balance |

### [Table 4]

**Table 4**

| No. | Alloy | | |
|---|---|---|---|
| | Skin material | Core material | |
| C1 | A1 | B1 | Within the scope of the present disclosure of claim 4 |
| C2 | A1 | B2 | |
| C3 | A1 | B3 | |
| C4 | A1 | B4 | |
| C5 | A1 | B5 | |
| C6 | A1 | B6 | |

The alloy components set forth in Tables 1, 2, and 3 are the results of measurement of cast ingots using an emission spectrophotometer.

The single sheets and clad sheets produced as described above in the combinations set forth in Table 4 were subjected to sensitization treatment at 175°C for 5 hours and subjected to characteristic evaluation as described below.

### (a) Surface Density of Mg-Si-Based Crystallized Product in Al-Mg-Si-Based Alloy Material

Specimens for observing a microstructure were cut out of the Al-Mg-Si-based alloy portions (a single sheet in the case of a single sheet sample and a skin material in the case of a clad sheet sample) of various sheet samples, and the distribution of a Mg-Si-based crystallized product in a cross section in a thickness direction was measured. A composition image at a magnification of 2,500 times was observed using a scanning electron microscope (SEM), five visual fields were optionally selected, a Mg-Si-based crystallized product observed to be black was extracted by image processing to measure a surface density in the case of an equivalent circle diameter of 0.1 to 5.0 µm and a surface density in the case of an equivalent circle diameter of more than 5 µm and 10.0 µm or less, and the arithmetic mean value of the five visual fields was determined.

### (b) Volume Density of Mg-Si-Based Precipitate in Al-Mg-Si-Based Alloy Material

The single sheet and the clad sheet were heat-treated at 175°C for 5 hours. Then, specimens having a thickness of around 100 to 200 nm were produced from surfaces of the sheets by a focused ion beam (FIB). Acicular precipitates precipitated in three directions along the 100-plane of an aluminum matrix were observed optionally at five points by using a transmission electron microscope (TEM) at a magnification of 500,000 times. The number of acicular Mg-Si-based precipitates having a length of 10 to 1,000 nm was measured in the image of each point. Further, among spotted precipitates (viewed as being spotted because an acicular precipitate was observed from the front) that are orthogonal to the acicular precipitates, the number of spotted precipitates having a diameter of 100 nm or less was also measured. A value obtained by dividing, by a measurement volume, a number, obtained by totalizing the number and the number of acicular precipitates, was regarded as the volume density of the Mg-Si-based precipitate at each observation point. Finally, the arithmetic mean value of the volume density at each observation point was calculated and regarded as the volume density of the Mg-Si-based precipitate in the sample. The reason why the number of the spotted precipitates (viewed as being spotted because an acicular precipitate was observed from the front) was also totalized is described as follows. In other words, the acicular Mg-Si-based precipitates were similarly precipitated in three directions along the 100-surface in the aluminum matrix, and the precipitates viewed as being spotted may also satisfy a length of 10 to 1,000 nm when viewed from a perpendicular direction. It is difficult to observe a Mg-Si-based precipitate having a length of less than 10 nm with a transmission electron microscope (TEM), and it is impossible to clearly recognize and measure the Mg-Si-based precipitate as a point even when viewed from the front. An acicular Mg-Si-based precipitate having a length of more than 1,000 nm was exempted from measurement because of having a diameter of more than 100 nm when viewed from the front. A Mg-Si-based crystallized product viewed as a point was also exempted from measurement because of having a diameter of 200 nm or more.

### (c) Immersion Treatment

Further, the samples set forth in Table 1 and Table 3 were immersed in aqueous solutions having conditions set forth in Table 5. The concentration of Cl⁻ and the pH of each solution were adjusted with NaCl and HCl. In addition, the sample was immersed after the temperature of the aqueous solution reached a predetermined temperature. After the immersion, a sample surface was washed with distilled water and dried with a blower, and the characteristics of the sheet sample was evaluated as described below.

### [Table 5]

**Table 5**

| No. | Immersion conditions | | | | | |
|---|---|---|---|---|---|---|
| | Alloy | Solution temperature (°C) | pH | Concentration of Cl (%) | Immersion time (min) | |
| D1 | A1 | 100 | 6.4 | 0.1 | 60 | |
| D2 | A1 | 65 | 6.4 | 0.1 | 60 | |
| D3 | A1 | 80 | 4.0 | 0.1 | 60 | |
| D4 | A1 | 80 | 10.0 | 0.1 | 60 | |
| D5 | A1 | 80 | 6.4 | 0.0 | 60 | |
| D6 | A1 | 80 | 6.4 | 0.5 | 60 | |
| D7 | A1 | 80 | 6.4 | 0.1 | 1 | |
| D8 | A2 | 80 | 6.4 | 0.1 | 1440 | |
| D9 | A3 | 80 | 6.4 | 0.1 | 60 | |
| D10 | A4 | 80 | 6.4 | 0.1 | 60 | |
| D11 | A5 | 80 | 6.4 | 0.1 | 60 | |
| D12 | A6 | 80 | 6.4 | 0.1 | 60 | |
| D13 | A7 | 80 | 6.4 | 0.1 | 60 | |
| D14 | A8 | 80 | 6.4 | 0.1 | 60 | |
| D15 | A9 | 80 | 6.4 | 0.1 | 60 | |
| D16 | A10 | 80 | 6.4 | 0.1 | 60 | |
| D17 | A11 | 80 | 6.4 | 0.1 | 60 | |
| D18 | A12 | 80 | 6.4 | 0.1 | 60 | |
| D19 | A13 | 80 | 6.4 | 0.1 | 60 | Within the scope of |
| D20 | A14 | 80 | 6.4 | 0.1 | 60 | the present disclosure of |
| D21 | A15 | 80 | 6.4 | 0.1 | 60 | claim 5 |
| D22 | A16 | 80 | 6.4 | 0.1 | 60 | |
| D23 | A17 | 80 | 6.4 | 0.1 | 60 | |
| D24 | A18 | 80 | 6.4 | 0.1 | 60 | |
| D25 | A19 | 80 | 6.4 | 0.1 | 60 | |
| D26 | A20 | 80 | 6.4 | 0.1 | 60 | |
| D27 | A21 | 80 | 6.4 | 0.1 | 60 | |
| D28 | A22 | 80 | 6.4 | 0.1 | 60 | |
| D29 | A23 | 80 | 6.4 | 0.1 | 60 | |
| D30 | A24 | 80 | 6.4 | 0.1 | 60 | |
| D31 | A25 | 80 | 6.4 | 0.1 | 60 | |
| D32 | A26 | 80 | 6.4 | 0.1 | 60 | |
| D33 | A27 | 80 | 6.4 | 0.1 | 60 | |
| D34 | C1 | 80 | 6.4 | 0.1 | 60 | |
| D35 | C2 | 80 | 6.4 | 0.1 | 60 | |
| D36 | C3 | 80 | 6.4 | 0.1 | 60 | |
| D37 | C4 | 80 | 6.4 | 0.1 | 60 | |
| D38 | C5 | 80 | 6.4 | 0.1 | 60 | |
| D39 | C6 | 80 | 6.4 | 0.1 | 60 | |
| D40 | A1 | 64 | 6.4 | 0.1 | 60 | |
| D41 | A1 | 80 | 2.9 | 0.1 | 60 | |
| D42 | A1 | 80 | 10.1 | 0.1 | 60 | |
| D43 | A1 | 80 | 6.4 | 0.6 | 60 | |
| D44 | A1 | 80 | 6.4 | 0.1 | 0.5 | |
| D45 | A28 | 80 | 6.4 | 0.1 | 60 | |
| D46 | A29 | 80 | 6.4 | 0.1 | 60 | |
| D47 | A30 | 80 | 6.4 | 0.1 | 60 | |
| D48 | A31 | 80 | 6.4 | 0.1 | 60 | Outside the scope of |
| D49 | A32 | 80 | 6.4 | 0.1 | 60 | the present disclosure of |
| D50 | A33 | 80 | 6.4 | 0.1 | 60 | claim 5 |
| D51 | A34 | 80 | 6.4 | 0.1 | 60 | |
| D52 | A35 | 80 | 6.4 | 0.1 | 60 | |
| D53 | A36 | 80 | 6.4 | 0.1 | 60 | |
| D54 | A37 | 80 | 6.4 | 0.1 | 60 | |
| D55 | A38 | 80 | 6.4 | 0.1 | 60 | |
| D56 | A39 | 80 | 6.4 | 0.1 | 60 | |
| D57 | A40 | 80 | 6.4 | 0.1 | 60 | |

### (d) Concentrations of Si and Mg in Aluminum Oxide Coating Film

The concentrations of Si and Mg in an aluminum oxide coating film were determined by measuring the emission intensities of Si and Mg in a sputtering component by using glow discharge optical emission spectrometry (GDOES) while sputtering the aluminum oxide coating film. Specifically, calibration curves were generated for emission intensities obtained from GDOES and the concentrations of Si and Mg, respectively, by using aluminum materials with the known concentrations of Si and Mg, formed on surfaces of A1100, A2024, A3003, A4032, A5052, A6022, and A7072, by analysis by inductively coupled plasma (ICP), and the concentrations of Si and Mg in the sputtering component of a measurement sample were determined based on the calibration curves. The sputtering conditions of GDOES were set at 800 Pa to which a sample chamber with high-purity Ar was set, a pulse frequency of 100 Hz, a duty cycle of 0.5, and an effective value of 15 W. The thickness of the aluminum oxide coating film was determined based on the emission intensity of O as described above.

### (e) SWAAT Test

As evaluation of corrosion resistance, SWAAT according to ASTM G85 simulating an atmospheric air exposure environment was conducted for 1,000 hours by using the specimens described above. After the SWAAT test, a corrosion product on a specimen surface was removed, and the depth of corrosion was measured. The maximum value of values at ten measurement spots was regarded as the depth of corrosion. A case in which the depth of corrosion was less than 50 µm was evaluated as superior, a case in which the depth of corrosion was 50 µm or more and 100 µm or less was regarded as favorable, and cases in which the depth of corrosion was more than 100 µm and in which penetration occurred were evaluated as defective.

### (f) Cycle Immersion Test

A circulation cycle test simulating a water-based refrigerant environment was conducted as further evaluation of corrosion resistance. An aqueous solution containing 195 ppm of Cl⁻, 60 ppm of SO₄²⁻, 1 ppm of Cu²⁺, and 30 ppm of Fe²⁺ at a temperature of 88°C was left standing on a test surface of each of the specimens described above at a solution volume to specimen area ratio of 6 mL/cm² for 8 hours, and the specimens were then left standing to cool for 16 hours. Such a cycle including heating and standing to cool was performed for 3 months. After the cycle immersion test, a corrosion product on a specimen surface was removed, and the depth of corrosion was measured. The maximum value of values at ten measurement spots was regarded as the depth of corrosion. A case in which the depth of corrosion was less than 50 µm was evaluated as superior, a case in which the depth of corrosion was 50 µm or more and 100 µm or less was regarded as favorable, and cases in which the depth of corrosion was more than 100 µm and in which penetration occurred were evaluated as defective. A core material surface was subjected to masking and prevented from coming in contact with a test aqueous solution.

### Each evaluation result of the above (a) to (f) is set forth in Tables 6 to 8.

In Present Disclosure Examples 1 to 39, the maximum concentrations of Si and Mg in an aluminum oxide coating film were within set ranges, and the evaluation results of the SWAAT test and the circulation cycle test were favorable, as set forth in Tables 6 and 7. In contrast, in Comparative Examples 1 to 18, no favorable evaluation results were obtained, as set forth in Table 8.

[Table 6]

**Table 6**

| | No. | Alloy | Characteristic evaluation | | | | | | |
|---|---|---|---|---|---|---|---|---|---|
| | | | Surface density of Mg-Si-based crystallized product having equivalent circle diameter of 0.1 to 5.0 µm (particles/mm²) | Surface density of Mg-Si-based crystallized product having equivalent circle diameter of more than 5.0 µm and 10.0 µm or less (particles/mm²) | Volume density of Mg-Si-based precipitate having length of 10 to 1,000nm (particles/µm³) | Maximum concentration of Si in aluminum hydrous oxide coating film (mass%) | Maximum concentration of Mg in aluminum hydrous oxide coating film (mass%) | Depth of corrosion after SWAAT (µm) | Depth of corrosion in cycle immersion test (µm) |
| Present Disclosure Example 1 | D1 | A1 | 73240 | 0 | 58310 | 19.2 | 14.2 | 43 | 23 |
| Present Disclosure Example 2 | D2 | A1 | 73240 | 0 | 58310 | 8.9 | 0.7 | 47 | 33 |
| Present Disclosure Example 3 | D3 | A1 | 73240 | 0 | 58310 | 10.3 | 15.2 | 44 | 28 |
| Present Disclosure Example 4 | D4 | A1 | 73240 | 0 | 58310 | 21.6 | 7.6 | 38 | 19 |
| Present Disclosure Example 5 | D5 | A1 | 73240 | 0 | 58310 | 20.4 | 6.2 | 35 | 20 |
| Present Disclosure Example 6 | D6 | A1 | 73240 | 0 | 58310 | 21.1 | 8.3 | 24 | 23 |
| Present Disclosure Example 7 | D7 | A1 | 73100 | 0 | 18460 | 17.3 | 6.3 | 49 | 19 |
| Present Disclosure Example 8 | D8 | A2 | 28490 | 0 | 39570 | 13.1 | 7.3 | 47 | 18 |
| Present Disclosure Example 9 | D9 | A3 | 9250 | 0 | 23670 | 5.2 | 1.2 | 45 | 29 |
| Present Disclosure Example 10 | D10 | A4 | 3020 | 0 | 8560 | 2.3 | 0.9 | 44 | 30 |
| Present Disclosure Example 11 | D11 | A5 | 110 | 0 | 1100 | 0.1 | 0.1 | 63 | 35 |
| Present Disclosure Example 12 | D12 | A6 | 120 | 0 | 2490 | 0.2 | 0.3 | 70 | 36 |
| Present Disclosure Example 13 | D13 | A7 | 146000 | 4 | 93660 | 38.2 | 18.9 | 83 | 49 |
| Present Disclosure Example 14 | D14 | A8 | 110 | 0 | 1700 | 0.2 | 0.2 | 81 | 40 |
| Present Disclosure Example 15 | D15 | A9 | 96220 | 3 | 92860 | 26.3 | 13.4 | 95 | 47 |
| Present Disclosure Example 16 | D16 | A10 | 121000 | 4 | 92980 | 34.1 | 14.2 | 98 | 51 |
| Present Disclosure Example 17 | D34 | C1 | 72240 | 0 | 59180 | 21.2 | 7.9 | 49 | 31 |
| Present Disclosure Example 18 | D35 | C2 | 72550 | 0 | 62130 | 17.7 | 6.9 | 44 | 28 |
| Present Disclosure Example 19 | D36 | C3 | 71390 | 0 | 59740 | 18.0 | 8.9 | 42 | 28 |
| Present Disclosure Example 20 | D37 | C4 | 73020 | 0 | 60820 | 17.8 | 7.3 | 39 | 28 |
| Present Disclosure Example 21 | D38 | C5 | 73390 | 0 | 62520 | 19.3 | 7.7 | 43 | 29 |
| Present Disclosure Example 22 | D39 | C6 | 72950 | 0 | 83320 | 20.7 | 11.0 | 37 | 21 |

### [Table 7]

**Table 7**

| | No. | Alloy | Characteristic evaluation | | | | | | |
|---|---|---|---|---|---|---|---|---|---|
| | | | Surface density of Mg-Si-based crystallized product having equivalent circle diameter of 0.1 to 5.0 µm (particles/mm²) | Surface density of Mg-Si-based crystallized product having equivalent circle diameter of more than 5.0 µm and 10.0 µm or less (particles/mm²) | Volume density of Mg-Si-based precipitate having length of 10 to 1,000nm (particles/µm³) | Maximum concentration of Si in aluminum hydrous oxide coating film (mass%) | Maximum concentration of Mg in aluminum hydrous oxide coating film (mass%) | Depth of corrosion after SWAAT (µm) | Depth of corrosion in cycle immersion test (µm) |
| Present Disclosure Example 23 | D17 | A11 | 71100 | 0 | 67460 | 21.8 | 8.9 | 51 | 28 |
| Present Disclosure Example 24 | D18 | A12 | 62390 | 0 | 62790 | 20.9 | 8.4 | 37 | 19 |
| Present Disclosure Example 25 | D19 | A13 | 73420 | 0 | 84280 | 23.6 | 9.3 | 38 | 22 |
| Present Disclosure Example 26 | D20 | A14 | 80340 | 0 | 90210 | 21.2 | 8.3 | 36 | 27 |
| Present Disclosure Example 27 | D21 | A15 | 72390 | 0 | 75250 | 20.6 | 7.4 | 33 | 23 |
| Present Disclosure Example 28 | D22 | A16 | 65720 | 0 | 85500 | 17.3 | 6.9 | 29 | 25 |
| Present Disclosure Example 29 | D23 | A17 | 72300 | 0 | 64510 | 18.7 | 7.0 | 29 | 22 |
| Present Disclosure Example 30 | D24 | A18 | 72310 | 0 | 67320 | 19.6 | 6.5 | 28 | 24 |
| Present Disclosure Example 31 | D25 | A19 | 83290 | 0 | 77540 | 21.4 | 8.8 | 32 | 25 |
| Present Disclosure Example 32 | D26 | A20 | 68990 | 0 | 90410 | 17.0 | 8.9 | 30 | 21 |
| Present Disclosure Example 33 | D27 | A21 | 62389 | 0 | 82740 | 17.9 | 8.9 | 38 | 24 |
| Present Disclosure Example 34 | D28 | A22 | 73290 | 0 | 88190 | 20.1 | 6.8 | 40 | 25 |
| Present Disclosure Example 35 | D29 | A23 | 63410 | 0 | 88290 | 17.3 | 9.0 | 25 | 20 |
| Present Disclosure Example 36 | D30 | A24 | 78320 | 0 | 57160 | 20.6 | 6.5 | 29 | 21 |
| Present Disclosure Example 37 | D31 | A25 | 83210 | 0 | 90860 | 21.7 | 9.2 | 25 | 19 |
| Present Disclosure Example 38 | D32 | A26 | 74610 | 0 | 72690 | 19.0 | 10.0 | 43 | 22 |
| Present Disclosure Example 39 | D33 | A27 | 148000 | 4 | 80480 | 39.8 | 19.7 | 83 | 40 |

### [Table 8]

**Table 8**

| | No. . | Alloy | Characteristic evaluation | | | | | | |
|---|---|---|---|---|---|---|---|---|---|
| | | | Surface density of Mg-Si-based crystallized product having equivalent circle diameter of 0.1 to 5.0 µm (particles/mm²) | Surface density of Mg-Si-based crystallized product having equivalent circle diameter of more than 5.0 µm and 10.0 µm or less (particles/mm²) | Volume density of Mg-Si-based precipitate having length of 1 0 to 1,000nm (particles/µm³) | Maximum concentration of Si in aluminum hydrous oxide coating film (mass%) | Maximum concentration of Mg in aluminum hydrous oxide coating film (mass%) | Depth of corrosion after SWAAT (µm) | Depth of corrosion in cycle immersion test (µm) |
| Comparative Example 1 | D40 | A1 | 71110 | 0 | 61650 | 18.0 | 9.0 | 130 | 39 |
| Comparative Example 2 | D41 | A1 | 71110 | 0 | 61650 | 2.1 | 0.3 | 132 | 28 |
| Comparative Example 3 | D42 | A1 | 71110 | 0 | 61650 | 1.4 | 0.1 | 110 | 32 |
| Comparative Example 4 | D43 | A1 | 71110 | 0 | 61650 | 0.7 | 0.0 | 140 | 29 |
| Comparative Example 5 | D44 | A1 | 71110 | 0 | 61650 | 0.7 | 0.0 | 119 | 22 |
| Comparative Example 6 | D45 | A28 | 30 | 0 | 200 | 0 | 3.2 | Penetration | 128 |
| Comparative Example 7 | D46 | A29 | 167280 | 4 | 4540 | 41.2 | 19.2 | Penetration | 126 |
| Comparative Example 8 | D47 | A30 | 40 | 0 | 100 | 0.1 | 0.0 | Penetration | Penetration |
| Comparative Example 9 | D48 | A31 | 152390 | 6 | 3140 | 39.7 | 21.3 | Penetration | 139 |
| Comparative Example 10 | D49 | A32 | 187430 | 0 | 155400 | 17.4 | 9.2 | Penetration | Penetration |
| Comparative Example 11 | D50 | A33 | 109450 | 0 | 126720 | 19.3 | 9.2 | Penetration | Penetration |
| Comparative Example 12 | D51 | A34 | 107320 | 1 | 113310 | 17.4 | 9.3 | Penetration | 123 |
| Comparative Example 13 | D52 | A35 | 106490 | 0 | 121370 | 16.9 | 10.2 | Penetration | 130 |
| Comparative Example 14 | D53 | A36 | 102340 | 0 | 104440 | 15.8 | 11.0 | Penetration | 129 |
| Comparative Example 15 | D54 | A37 | 110320 | 1 | 116960 | 17.4 | 9.4 | Penetration | 110 |
| Comparative Example 16 | D55 | A38 | 100100 | 0 | 128550 | 19.2 | 10.7 | Penetration | 144 |
| Comparative Example 17 | D56 | A39 | 100300 | 0 | 126600 | 13.2 | 11.7 | Penetration | 145 |
| Comparative Example 18 | D57 | A40 | 101300 | 0 | 126600 | 13.2 | 11.7 | Penetration | 145 |

In Comparative Example 1, the temperature of the immersion aqueous solution was low. Therefore, an aluminum oxide coating film was not formed, and the result of the SWAAT test was defective.

In Comparative Example 2, the pH of the immersion aqueous solution was too low. Therefore, an aluminum oxide coating film was not formed, and the result of the SWAAT test was defective.

In Comparative Example 3, the pH of the immersion aqueous solution was too high. Therefore, an aluminum oxide coating film was not formed, and the result of the SWAAT test was defective.

In Comparative Example 4, the concentration of Cl⁻ in the immersion aqueous solution was too high. Therefore, an aluminum oxide coating film was not formed, and the result of the SWAAT test was defective.

In Comparative Example 5, the immersion time was short. Therefore, an aluminum oxide coating film was not formed, and the result of the SWAAT test was defective.

In Comparative Example 6, the content of Si in an Al-Mg-Si alloy was small. Therefore, the concentration of Si in the aluminum oxide coating film became low, and an aluminum oxide coating film having protective properties was not formed. Therefore, the results of the SWAAT test and the cycle immersion test were defective.

In Comparative Example 7, the content of Si in an Al-Mg-Si alloy was large. Therefore, the amount of precipitated pure Si became large, a corrosion rate was increased, and the results of the SWAAT test and the cycle immersion test were defective.

In Comparative Example 8, the content of Mg in an Al-Mg-Si alloy was small. Therefore, the concentration of Mg in the aluminum oxide coating film became low, and an aluminum oxide coating film having protective properties was not formed. As a result, the results of the SWAAT test and the cycle immersion test were defective.

In Comparative Example 9, the content of Mg in an Al-Mg-Si alloy was large. Therefore, the concentration of Mg in the aluminum oxide coating film became high, and an aluminum oxide coating film having protective properties was not formed. As a result, the results of the SWAAT test and the cycle immersion test were defective.

In Comparative Example 10, the content of Si in an Al-Mg-Si alloy was large. Therefore, the amount of precipitated pure Si became large, a corrosion rate was increased, and the results of the SWAAT test and the cycle immersion test were defective.

In Comparative Example 11, the content of Cu in an Al-Mg-Si alloy was large. Therefore, the concentration of Cu that passed through an aluminum oxide coating film and that was dissolved became high, and a corrosion rate was increased. As a result, the results of the SWAAT test and the cycle immersion test were defective.

In Comparative Example 12, the content of Mn in an Al-Mg-Si alloy was large. Therefore, a giant crystallized product was precipitated, thereby inhibiting the homogeneous formation of an aluminum oxide coating film. As a result, the results of the SWAAT test and the cycle immersion test were defective.

In Comparative Example 13, the content of Ti in an Al-Mg-Si alloy was large. Therefore, a giant crystallized product was precipitated, thereby inhibiting the homogeneous formation of an aluminum oxide coating film. As a result, the results of the SWAAT test and the cycle immersion test were defective.

In Comparative Example 14, the content of Zr in an Al-Mg-Si alloy was large. Therefore, a giant crystallized product was precipitated, thereby inhibiting the homogeneous formation of an aluminum oxide coating film. As a result, the results of the SWAAT test and the cycle immersion test were defective.

In Comparative Example 15, the content of Cr in an Al-Mg-Si alloy was large. Therefore, a giant crystallized product was precipitated, thereby inhibiting the homogeneous formation of an aluminum oxide coating film. As a result, the results of the SWAAT test and the cycle immersion test were defective.

In Comparative Example 16, the content of Ni in an Al-Mg-Si alloy was large. Therefore, an intermetallic compound was not homogeneously dispersed, thereby inhibiting the homogeneous formation of an aluminum oxide coating film. As a result, the results of the SWAAT test and the cycle immersion test were defective.

In Comparative Example 17, the content of Fe in an Al-Mg-Si alloy was large. Therefore, an intermetallic compound was not homogeneously dispersed, thereby inhibiting the homogeneous formation of an aluminum oxide coating film. As a result, the results of the SWAAT test and the cycle immersion test were defective.

In Comparative Example 18, the content of V in an Al-Mg-Si alloy was large. Therefore, a giant crystallized product was precipitated, thereby inhibiting the homogeneous formation of an aluminum oxide coating film. As a result, the results of the SWAAT test and the cycle immersion test were defective.

### Industrial Applicability

There is obtained an Al-Mg-Si-based aluminum alloy material that can exhibit favorable corrosion resistance under an environment in which Cl⁻ is present, without utilizing sacrificial protection action, even in a material of which the wall thickness is reduced, due to an aluminum oxide coating film formed on a surface of the aluminum alloy material. In addition, the aluminum oxide coating film can be easily and inexpensively formed, and also has a small environmental load.

## Claims

1. An Al-Mg-Si-based aluminum alloy material comprising an aluminum alloy containing 0.10 to 1.50 mass% Si, 0.10 to 2.00 mass% Mg, with a balance of Al and inevitable impurities, wherein an oxide coating film mainly containing aluminum is formed on a surface of the aluminum alloy material, a Mg-Si-based crystallized product existing in the aluminum alloy material and having an equivalent circle diameter of 0.1 to 5.0 µm is contained at 100 to 150,000 particles/mm², a Mg-Si-based crystallized product having an equivalent circle diameter of more than 5.0 µm and 10.0 µm or less is contained at 5 particles/mm² or less, and the oxide coating film comprises Si at a maximum concentration of 0.1 to 40.0 mass%, Mg at a maximum concentration of 0.1 to 20.0 mass%, with a balance of Al and inevitable impurities.

2. The aluminum alloy material according to claim 1, wherein the aluminum alloy further comprises one or more selected from 0.05 to 1.00 mass% Fe, 0.05 to 1.00 mass% Ni, 0.05 to 1.00 mass% Cu, 0.05 to 1.50 mass% Mn, 0.05 to 0.30 mass% Ti, 0.05 to 0.30 mass% Zr, 0.05 to 0.30 mass% Cr, and 0.05 to 0.30 mass% V.

3. The aluminum alloy material according to claim 1 or 2, wherein a Mg-Si-based precipitate having a length of 10 to 1,000 nm is contained at 1,000 to 100,000 particles/µm³ in the aluminum alloy material after sensitization treatment for observation at 175°C for 5 hours.

4. An aluminum alloy clad material, wherein the aluminum alloy material according to any one of claims 1 to 3 is clad on at least one surface of an aluminum core material.

5. A method for producing the aluminum alloy material according to any one of claims 1 to 3, the method comprising immersing an aluminum alloy material on which the oxide coating film has not yet been formed, for 1 minute or more, in an aqueous solution environment having a Cl⁻ concentration of 0.5% or less, a pH 4 to 10, and a liquid temperature of 65°C or more.
